# EUROPEAN PATENT APPLICATION

(11) **EP 1 454 937 A2**
(43) Date of publication of application: **08.09.2004**
(21) Application number: 04250260.9
(22) Date of filing: 20.01.2004
(51) Int. Cl.: C08G 59/62, C08L 63/00

(54) **Epoxy resin curing agent, curable epoxy resin composition and cured products**

(30) Priority: 21.01.2003 JP 2003012119; 29.01.2003 JP 2003020149
(71) Applicant: MITSUBISHI GAS CHEMICAL COMPANY, INC., Chiyoda-ku, Tokyo (JP)
(72) Inventor: Ishii, Kenji, 1-1, Niijuku 6-chome,Katsushika-ku,Tokyo (JP); Norisue, Yasumasa, 1-1, Niijuku 6-chome,Katsushika-ku,Tokyo (JP); Ohno, Daisuke, 1-1, Niijuku 6-chome,Katsushika-ku,Tokyo (JP); Nawata, Michio, 1-1, Niijuku 6-chome,Katsushika-ku,Tokyo (JP)
(74) Representative: Srinivasan, Ravi Chandran

(57) **Abstract**

An epoxy resin curing agent having a number average molecular weight of 500 to 3,000, represented by the formula (1), 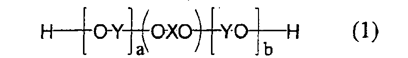 wherein:
- -(O-X-O)- represents a moiety of the formula (2 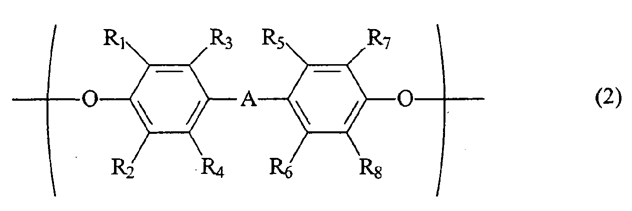
in which R₁, R₂, R₇ and R₈ are the same or different and represent a halogen atom, a C₁-C₆ alkyl group or a phenyl group, R₃, R₄, R₅ and R₆ are the same or different and represent a hydrogen atom, a halogen atom, a C₁-C₆ alkyl group or a phenyl group, and A is a direct bond or a linear, branched or cyclic C₁-C₂₀ hydrocarbon group;
- -(Y-O)- is a moiety of the formula (3), 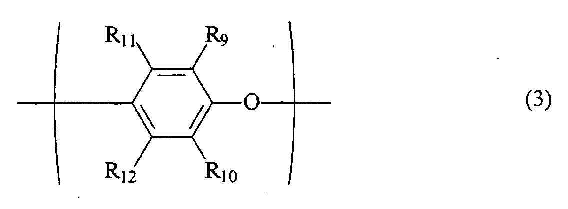
in which R₉ and R₁₀ are the same or different and represent a halogen atom, a C₁-C₆ alkyl group or a phenyl group and R₁₁ and R₁₂ are the same or different and represent a hydrogen atom, a halogen atom, a C₁-C₆ alkyl group or a phenyl group or -(Y-O)- is a random arrangement of at least two kinds of moieties of the formula (3); and
- each of a and b is an integer of 0 to 30, provided that at least either a or b is not 0.

## Description

### Field of the Invention

The present invention relates to an epoxy resin curing agent and a curable epoxy resin composition containing the epoxy resin curing agent and an epoxy resin. The curable resin composition containing the epoxy resin curing agent of the present invention and an epoxy resin can provide a polymer material excellent in heat resistance and low dielectric characteristics and low in water absorptivity by curing it. The curable resin composition of the present invention can be widely used for applications such as a semiconductor-sealing material, an electrical insulating material, a resin for a copper-clad laminate, a resist, a sealing resin for electronic parts, a resin for a color filter of a liquid crystal, a coating composition, various coating agents, an adhesive, a material for a buildup laminate and FRP.

### Prior Arts of the Invention

Epoxy resins have been used as a raw material for a functional polymer material. However, in recent years, as higher performances are required in their application fields, physical properties required as a functional polymer material become severer increasingly. As such physical properties, for example, heat resistance, weather resistance, chemical resistance, low water absorptivity, high fracture toughness, low dielectric constant and low dielectric loss tangent are required.

For example, epoxy resin cured products are widely used as an insulating material in a printed circuit board field. However, the conventional epoxy resin cured products are becoming insufficient in dielectric characteristics from a signal fade problem attendant upon a recent increase in the frequency of a signal, so that a material having further lower dielectric characteristics is desired. A semiconductor-sealing material is required to have high heat resistance and low moisture absorptivity, since cracks occur in the semiconductor-sealing material because of exposure to a high temperature during soldering and because of swelling of an absorbed water content. It can not be said that epoxy resin sealing materials using a cresol novolak type epoxy resin and a phenol novolak type resin curing agent, which sealing materials are chiefly used now, are sufficient in both heat resistance and moisture absorptivity.

For these requirements, for example, JP-A-9-208673 proposes a method using, for example, an epoxy resin curing agent and indene as an additive. However, recent requirements of high heat resistance, low dielectric characteristics and low water absorptivity are increasingly becoming severer.

### Summary of the Invention

It is an object of the present invention to provide an epoxy resin curing agent and a curable epoxy resin composition each of which gives a cured product that is excellent in heat resistance and has a low dielectric constant, a low dielectric loss tangent and a low water absorptivity.

According to the present invention, there is provided an epoxy resin curing agent having a number average molecular weight of 500 to 3,000, represented by the formula (1), 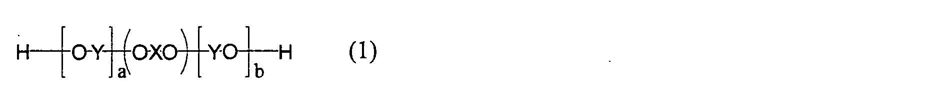 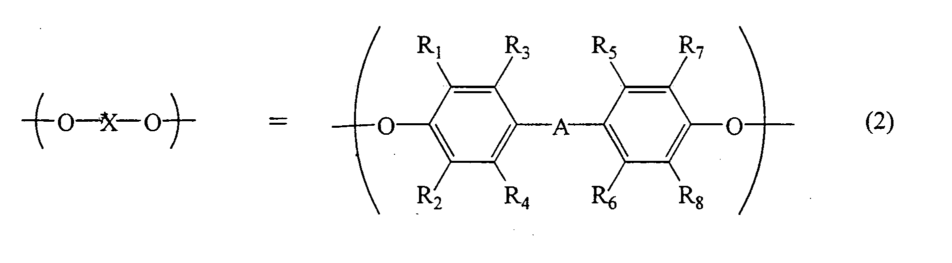 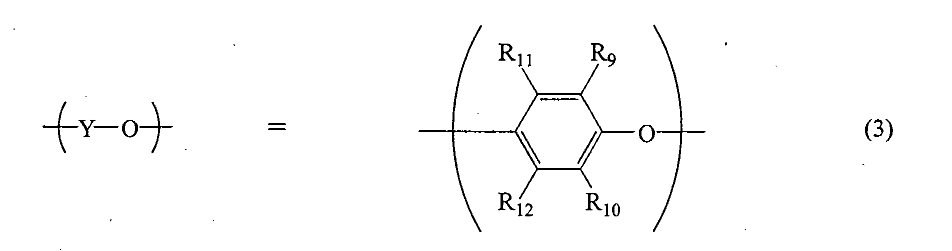 wherein -(O-X-O)- is represented by the formula (2) (in which R₁, R₂, R₇ and R₈ may be the same or different and are a halogen atom, an alkyl group having 6 or less carbon atoms or a phenyl group, R₃, R₄, R₅ and R₆ may be the same or different and are a hydrogen atom, a halogen atom, an alkyl group having 6 or less carbon atoms or a phenyl group, and A is a direct bond or a linear, branched or cyclic hydrocarbon having 20 or less carbon atoms), -(Y-O)- is an arrangement of one kind of structure defined by the formula (3) or a random arrangement of at least two kinds of structures defined by the formula (3) (in which R₉ and R₁₀ may be the same or different and are a halogen atom, an alkyl group having 6 or less carbon atoms or a phenyl group and R₁₁ and R₁₂ may be the same or different and are a hydrogen atom, a halogen atom, an alkyl group having 6 or less carbon atoms or a phenyl group), and each of a and b is an integer of 0 to 30, provided that at least either a or b is not 0.

According to the present invention, further, there is provided a curable epoxy resin composition containing an epoxy resin and the above epoxy resin curing agent.

According to the present invention, furthermore, there is provided a cured product obtainable by curing the above resin composition.

### Detailed Description of the Invention

The present inventors have made diligent studies and as a result found that, when a bifunctional phenylene ether oligomer having the excellent dielectric characteristics and heat resistance of a polyphenylene ether (to be sometimes referred to as "PPE" hereinafter) structure and having a number average molecular weight of 500 to 3,000 is used as an epoxy resin curing agent and the above oligomer and an epoxy resin are combined and cured, there can be obtained a cured product having excellent heat resistance, low dielectric characteristics and low water absorptivity. On the basis of the above finding, the present inventors have completed the present invention.

The present invention will be explained in detail hereinafter. In the compound represented by the formula (1), -(O-X-O)- is represented by the formula (2). In the formula (2), R₁, R₂, R₇ and R₈ may be the same or different and are a halogen atom, an alkyl group having 6 or less carbon atoms or a phenyl group. R₃, R₄, R₅ and R₆ may be the same or different and are a hydrogen atom, a halogen atom, an alkyl group having 6 or less carbon atoms or a phenyl group. A is a direct bond or a linear, branched or cyclic hydrocarbon having 20 or less carbon atoms. In the formula (1), -(Y-O-) is represented by the formula (3) and is an arrangement of one kind of structure defined by the formula (3) or a random arrangement of at least two kinds of structures defined by the formula (3). In the formula (3), R₉ and R₁₀ may be the same or different and are a halogen atom, an alkyl group having 6 or less carbon atoms or a phenyl group and R₁₁ and R₁₂ may be the same or different and are a hydrogen atom, a halogen atom, an alkyl group having 6 or less carbon atoms or a phenyl group. Each of a and b is an integer of 0 to 30, provided that at least either a or b is not 0. Preferably, R₁, R₂, R₇ and R₈ are an alkyl group having 3 or less carbon atoms, R₃, R₄, R₅ and R₆ are a hydrogen atom or an alkyl group having 3 or less carbon atoms, R₉ and R₁₀ are an alkyl group having 3 or less carbon atoms, and R₁₁ and R₁₂ are a hydrogen atom or an alkyl group having 3 or less carbon atoms. When the molecular weight is too small, the heat resistance and electric characteristics which a phenylene ether structure has can not be obtained. When the molecular weight is too large, the reactivity with the epoxy resin decreases. The number average molecular weight is preferably 500 to 3,000.

In the above formula (1), particularly preferable compounds are as follows.

Particularly preferred is an epoxy resin curing agent wherein R₁, R₂, R₇ and R₈ in -(O-X-O)- of the formula (2) are a methyl group and -(Y-O)- has a structure of an arrangement of the formula (4) or the formula (5) or a random arrangement of the formula (4) and the formula (5), 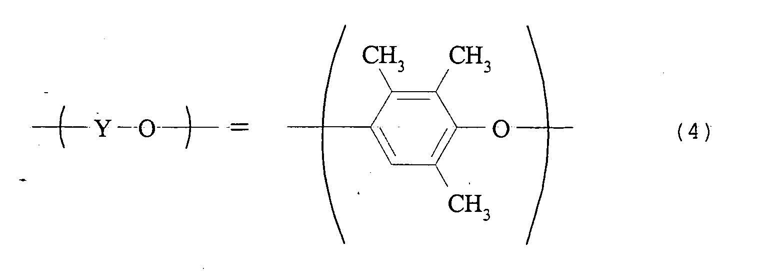 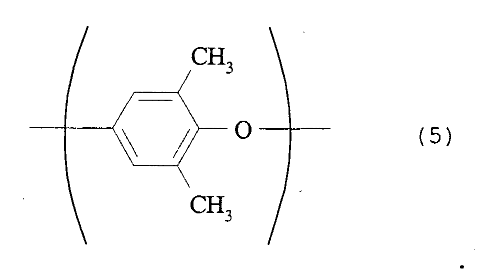 Particularly preferred are an epoxy resin curing agent according to the above epoxy resin curing agent, wherein R₃, R₄, R₅ and R₆ in -(O-X-O)- of the formula (2) are a hydrogen group, and an epoxy resin curing agent according to the above epoxy resin curing agent, wherein, in -(O-X-O)- of the formula (2), R₃ and R₆ are a hydrogen group and R₄ and R₅ are a methyl group.

Regarding the above various particularly-preferred epoxy resin curing agents, further preferable are epoxy resin curing agents wherein -(Y-O)- is represented by the formula (5).

The process for producing the epoxy resin curing agent represented by the formula (1) is not specially limited. The above epoxy resin curing agent can be produced by any process. For example, it can be produced by oxidatively coupling a bifunctional phenol compound and a monofunctional phenol compound in the presence of copper and an amine according to the method disclosed in JP-A-2003-212990.

When the epoxy resin curing agent represented by the formula (1) is used to produce the curable epoxy resin composition, it is preferred to incorporate the epoxy resin curing agent and the epoxy resin such that the molar ratio (B/A) of the mole (A) of hydroxyl group of the epoxy resin curing agent and the mole (B) of epoxy group of the epoxy resin becomes 0.5 to 10. The above molar ratio (B/A) is particularly preferably 1 to 5.

The epoxy resin used in the present invention can be selected from known epoxy resins. Examples thereof include a bisphenol A type epoxy resin, a bisphenol F type epoxy resin, a biphenyl type epoxy resin, a phenol novolak type epoxy resin, a cresol novolak type epoxy resin, a xylene novolak type epoxy resin, triglycidyl isocyanurate, an alicyclic epoxy resin, a dicyclopentadiene novolak type epoxy resin, a biphenyl novolak type epoxy resin and epoxy resins having a PPE structure disclosed in JP-A-2003-155340 and JP-A-2003-212990. These epoxy resins may be used alone or in combination.

The curable epoxy resin composition of the present invention contains the above epoxy resin curing agent as an essential component. Other components to be contained are not specially limited, and a known epoxy curing agent may be used in combination. Examples thereof include phenols such as a phenol novolak resin, a cresol novolak resin, bisphenol A and bisphenol F, acid anhydrides such as methyl tetrahydro phthalic anhydride, hexahydro phthalic anhydride and pyromellitic anhydride, and amines such as diaminodiphenyl methane, diaminodiphenyl sulfone and dicyandiamide.

Further, it is preferred that the curable epoxy resin composition of the present invention contains the epoxy resin curing agent of the present invention in an amount of at least 5 wt%, preferably at least 10 wt%, based on. the total amount of all curing agents. When the above amount is small, an effect of improving physical properties is small in some cases.

The curable epoxy resin composition of the present invention may contain a known curing accelerator as required. Examples thereof include imidazoles such as 2-methylimidazole, 2-ethyl-4-methylimidazole, 2-phenylimidazole, 1-cyanoethyl-2-phenylimidazole, 1-cyanoethyl-2-ethyl-4-methylimidazole, 2-phenyl-4,5-dihydroxymethylimidazole and 2-phenyl-4-methyl-5-hydroxymethylimidazole, phosphines such as tributyl phosphine, triphenylphosphine and tris(dimethoxyphenyl)phosphine, phosphonium salts such as tetraphenyl phosphonium borate and methyltributyl phosphonium tetraphenylborate, amines such as 2,4,6-tris(dimethylaminomethyl)phenol, benzyldimethylamine and tetramethylbutyl guanidine, and ammonium salt such as triethylammonium tetraphenylborate. These curing accelerators may be used alone or in combination. The amount of the curing accelerator based on the epoxy resin is 0.05 - 7 wt%, more preferably 0.1 - 5 wt%.

Further, the curable resin composition of the present invention may contain a curable resin other than the epoxy resin, as required. Examples thereof include a cyanate resin, an oxetane resin and a resin having an ethylenic unsaturated group.

Further, when the curable resin composition of the present invention is produced, there may be added, as required, a known additive such as a glass fiber, an organic base material, an inorganic filler, a color pigment, an antifoamer, a surface conditioner, a flame retardant, an ultraviolet absorber, an antioxidant, a polymerization inhibitor, a flow regulator or a thermoplastic resin. Examples of the inorganic filler include silicas such as natural silica, fused silica and amorphous silica, white carbon, titanium white, aerosil, alumina, talc, natural mica, synthetic mica, kaolin, clay, aluminum hydroxide, barium sulfate, E-glass, A-glass, C-glass, L-glass, D-glass, S-glass, NE glass and M-glass G20. The so-obtained curable resin composition is suitable for various uses such as semiconductor-sealing material, an electrical insulating material, a resin for a copper-clad laminate, a resist, a sealing resin for electronic parts, a resin for a color filter of a liquid crystal, a coating composition, various coating agents, an adhesive, a material for a buildup laminate and FRP.

The cured product of the present invention can be obtained by curing the curable resin composition of the present invention, obtained by the above method, according to a known method such as a curing method using an electron beam, ultraviolet light or heat.

### Effect of the Invention

By curing the epoxy resin curing agent of the present invention in combination with epoxy resin, the epoxy resin curing agent can provide a cured product having a higher glass transition temperature and having low dielectric constant, low dielectric loss tangent and low water absorptivity. Therefore, it is remarkably useful as a high-functional polymer material and it can be widely used, as a thermally and electrically excellent material, for various applications such as a semiconductor-sealing material, an electrical insulating material, a resin for a copper-clad laminate, a resist, a sealing resin for electronic parts, a resin for a color filter of a liquid crystal, a coating composition, various coating agents, an adhesive, a material for a buildup laminate and FRP.

### Examples

The present invention will be explained more concretely with reference to Examples hereinafter, while the present invention shall not be specially limited to these Examples. Number average molecular weights and weight average molecular weights were measured according to the gel permeation chromatography (GPC) method.

### (Synthesis of Bifunctional phenylene ether oligomer)

### (Synthesis Example 1)

A longitudinally long reactor having a volume of 12 liters and equipped with a stirrer, a thermometer, an air-introducing tube and baffleplates was charged with 2.77 g (12.5 mmol) of CuBr₂, 0.54 g (3.1 mmol) of N,N'-di-t-butylethylenediamine, 20.03 g (198.3 mmol) of n-butyldimethylamine and 2,600 g of toluene. The components were stirred at a reaction temperature of 40 °C. A mixed solution (molar ratio of a bivalent phenol of the formula (2): a monovalent phenol of the formula (3) = 1:3) was obtained by dissolving 129.32 g (0.48 mol) of 2,2',3,3',5,5'-hexamethyl-(1,1'-biphenyl)-4,4'-diol (to be referred to as "HMBP" hereinafter), 175.31 g (1.44 mol) of 2,6-dimethylphenol, 0.36 g (2.1 mmol) of N,N'-di-t-butylethylenediamine and 7.79 g (77.1 mmol) of n-butyldimethylamine in 2,300 g of methanol. The obtained mixed solution was dropwise added to the mixture in the reactor over 230 minutes while carrying out bubbling with 5.2L/min of a mixed gas of nitrogen and air which gas had an oxygen concentration of 8 %, and stirring was carried out. After the completion of the addition, 1,500 g of water in which 14.20 g (37.4 mmol) of tetrasodium ethylenediamine tetraacetate was dissolved was added to the stirred mixture to terminate the reaction. An aqueous layer and an organic layer were separated. Then, the organic layer was washed with 1.0N hydrochloric acid aqueous solution and then washed with pure water. The thus-obtained solution was concentrated by an evaporator and then dried under a reduced pressure, to obtain 295.6 g of a curing agent of the present invention. The curing agent had a number average molecular weight of 650, a weight average molecular weight of 1,040 and a hydroxyl group equivalent of 325.

### (Synthesis Example 2)

A longitudinally long reactor having a volume of 12 liters and equipped with a stirrer, a thermometer, an air-introducing tube and baffleplates was charged with 6.64 g (29.9 mmol) of CuBr₂, 1.29 g (7.5 mmol) of N,N'-di-t-butylethylenediamine, 48.07 g (475.9 mmol) of n-butyldimethylamine and 2,600 g of toluene. The components were stirred at a reaction temperature of 40 °C. A mixed solution (molar ratio of a bivalent phenol of the formula (2): a monovalent phenol of the formula (3) = 1:10) was obtained by dissolving 129.32 g (0.48 mol) of HMBP, 584.38 g (4.79 mol) of 2,6-dimethylphenol, 0.87 g (5.1 mmol) of N,N'-di-t-butylethylenediamine and 18.69 g (185.1 mmol) of n-butyldimethylamine in 2,300 g of methanol. The obtained mixed solution was dropwise added to the mixture in the reactor over 230 minutes while carrying out bubbling with 5.2L/min of a mixed gas of nitrogen and air which gas had an oxygen concentration of 8 %, and stirring was carried out. After the completion of the addition, 1,500 g of water in which 34.09 g (89.7 mmol) of tetrasodium ethylenediamine tetraacetate was dissolved was added to the stirred mixture to terminate the reaction. An aqueous layer and an organic layer were separated. Then, the organic layer was washed with 1.0N hydrochloric acid aqueous solution and then washed with pure water. The thus-obtained solution was concentrated by an evaporator and then dried under a reduced pressure, to obtain 702.2 g of a curing agent of the present invention. The curing agent had a number average molecular weight of 1,490, a weight average molecular weight of 2,320 and a hydroxyl group equivalent of 750.

### (Synthesis Example 3)

A longitudinally long reactor having a volume of 12 liters and equipped with a stirrer, a thermometer, an air-introducing tube and baffleplates was charged with 9.36 g (42.1 mmol) of CuBr₂, 1.81 g (10.5 mmol) of N,N'-di-t-butylethylenediamine, 67.77 g (671.0 mmol) of n-butyldimethylamine and 2,600 g of toluene. The components were stirred at a reaction temperature of 40 °C. A mixed solution (molar ratio of a bivalent phenol of the formula (2): a monovalent phenol of the formula (3) = 1:15) was obtained by dissolving 129.32 g (0.48 mol) of HMBP, 878.4 g (7.2 mol) of 2,6-dimethylphenol, 1.22 g (7.2 mmol) of N,N'-di-t-butylethylenediamine and 26.35 g (260.9 mmol) of n-butyldimethylamine in 2,300 g of methanol. The obtained mixed solution was dropwise added to the mixture in the reactor over 230 minutes while carrying out bubbling with 5.2L/min of a mixed gas of nitrogen and air which gas had an oxygen concentration of 8 %, and stirring was carried out. After the completion of the addition, 1,500 g of water in which 48.06 g (126.4 mmol) of tetrasodium ethylenediamine tetraacetate was dissolved was added to the stirred mixture to terminate the reaction. An aqueous layer and an organic layer were separated. Then, the organic layer was washed with 1.0N hydrochloric acid aqueous solution and then washed with pure water. The thus-obtained solution was concentrated by an evaporator and then dried under a reduced pressure, to obtain 990.1 g of a curing agent of the present invention. The curing agent had a number average molecular weight of 1,975, a weight average molecular weight of 3,514 and a hydroxyl group equivalent of 990.

### (Example 1)

The curing agent obtained in Synthesis Example 1, an epoxy resin and a curing accelerator were mixed as shown in Table 1, such that the molar ratio (epoxy group/hydroxyl group) of a hydroxyl group and an epoxy group became 2. The mixture was molten, degassed and molded at 120 °C, and then it was cured at 180 °C for 10 hours, whereby a cured product was obtained.

### (Examples 2 to 5)

Each of the curing agents of the present invention obtained in Synthesis Examples 1, 2 and 3 was respectively mixed with an epoxy resin and a curing accelerator as shown in Table 1 such that the molar ratio (epoxy group/hydroxyl group) of a hydroxyl group and an epoxy group became 1, the mixture was molten, degassed and molded at 120 °C and then it was cured at 180 °C for 10 hours, whereby cured products were obtained.

### (Comparative Example 1)

An epoxy resin, an epoxy curing agent and a curing accelerator were mixed as shown in Table 1, and the mixture was molten, degassed and molded at 120 °C and then cured at 180 °C for 10 hours, whereby a cured product was obtained.

### (Comparative Examples 2 and 3)

An epoxy resin, an epoxy curing agent and a curing accelerator were mixed as shown in Table 1 such that the molar ratio (epoxy group/hydroxyl group) of a hydroxyl group and an epoxy group became 1, the mixture was molten, degassed and molded at 120 °C, and then it was cured at 180 °C for 10 hours, whereby cured products were obtained.

**Table 1**

| | | Ex.1 | Ex.2 | Ex.3 | Ex.4 | Ex.5 | CEx. 1 | CEx. 2 | CEx. 3 |
|---|---|---|---|---|---|---|---|---|---|
| Epoxy resin | Bisphenol A type epoxy | 100 | - | - | - | - | 100 | - | - |
| | Cresol novolak type epoxy | - | 100 | 100 | 100 | - | - | 100 | - |
| | Dicyclopentadiene novolak type epoxy | - | - | - | - | 100 | - | - | 100 |
| Curing agent | Oligomer of Syn-Ex.1 | 100 | 171 | - | - | 118 | - | - | - |
| | Oligomer of Syn-Ex.2 | - | - | 395 | - | - | - | - | - |
| | Oligomer of Syn-Ex.3 | - | - | - | 521 | - | - | - | - |
| | Phenol novolak resin | - | - | - | - | - | - | 54 | 37 |
| Curing accelerator | 2-ethyl-4-methyl imidazole | 0.5 | 0.2 | 0.2 | 0.2 | 0.2 | 2 | 0.2 | 0.2 |
| Ex. = Example, CEx. = Comparative Example, Syn-Ex.=Synthesis Example | | | | | | | | | |

Bisphenol A type epoxy: Epikote 828 (supplied by Japan epoxy resin)
Cresol novolak type Epoxy: EOCN102S (supplied by Nippon Kayaku Co., Ltd.)
Dicyclopentadiene novolak type Epoxy: HP7200 (supplied by DAINIPPON INK AND CHEMICALS, INCORPORATED)
Phenol novolak resin: TD2093 (supplied by DAINIPPON INK AND CHEMICALS, INCORPORATED)

The cured products obtained in Examples 1 to 5 and Comparative Examples 1 to 3 were evaluated for properties by the following methods.
Glass transition temperature (Tg): Obtained according to a dynamic viscoelasticity measurement (DMA). The measurement was carried out at an oscillation frequency of 10 Hz.
Dielectric constant and dielectric loss tangent: Obtained according to a cavity resonant oscillation method.
Water absorption rate: A water absorption rate after a treatment of 121°C, 100%Rh and 100 hours was measured.

Table 2 shows evaluation results of the above physical properties.

**Table 2**

| | Ex.1 | Ex.2 | Ex.3 | Ex.4 | Ex.5 | CEx.1 | CEx.2 | CEx.3 |
|---|---|---|---|---|---|---|---|---|
| Tg (°C) | 155 | 151 | 154 | 155 | 151 | 108 | 157 , | 160 |
| Dielectric constant (1GHz) | 2.85 | 2.83 | 2.80 | 2.79 | 2.83 | 3.26 | 3.22 | 3.17 |
| Dielectric loss tangent (1GHz) | 0.017 | 0.015 | 0.012 | 0.011 | 0.014 | 0.035 | 0.031 | 0.031 |
| Water absorption rate | 0.9 | 0.7 | 0.5 | 0.4 | 0.6 | 1.7 | 1.9 | 1.7 |
| Ex. = Example, CEx. = Comparative Example | | | | | | | | |

### (Synthesis Example 4)

A longitudinally long reactor having a volume of 2 liters and equipped with a stirrer, a thermometer, an air-introducing tube and baffleplates was charged with 1.3 g (0.012 mol) of CuCl, 70.7 g (0.55 mol) of di-n-butylamine and 400 g of methyl ethyl ketone. The components were stirred at a reaction temperature of 40 °C. A solution of 45.4 g (0.16 mol) of 4,4'-(1-methylethylidene)bis(2,6-dimethylphenol) as a bivalent phenol and 58.6 g (0.48 mol) of 2,6-dimethylphenol in 800 g of methyl ethyl ketone was dropwise added to the mixture in the reactor over 120 minutes while carrying out bubbling with 2L/min of air. After the completion of the addition, stirring was carried out for 60 minutes while continuing the bubbling with 2L/min of air. A disodium dihydrogen ethylenediamine tetraacetate aqueous solution was added to the stirred mixture to terminate the reaction. Then, an organic layer was washed with 1N hydrochloric acid aqueous solution and then washed with pure water. The thus-obtained solution was concentrated by an evaporator and then dried under a reduced pressure, to obtain 98.8 g of an epoxy resin curing agent of the present invention represented by the formula (1). The resin curing agent had a number average molecular weight of 845, a weight average molecular weight of 1,106 and a hydroxyl group equivalent of 451.

### (Synthesis Example 5)

A longitudinally long reactor having a volume of 2 liters and equipped with a stirrer, a thermometer, an air-introducing tube and baffleplates was charged with 1.3 g (0.012 mol) of CuCl, 70.7 g (0.55 mol) of di-n-butylamine and 400 g of methyl ethyl ketone. The components were stirred at a reaction temperature of 40 °C. A solution of 51.8 g (0.16 mol) of 4,4'-cyclohexylidenebis(2,6-dimethylphenol) as a bivalent phenol and 58.6 g (0.48 mol) of 2,6-dimethylphenol in 800 g of methyl ethyl ketone was dropwise added to the mixture in the reactor over 120 minutes while carrying out bubbling with 2L/min of air. After the completion of the addition, stirring was carried out for 60 minutes while continuing the bubbling with 2L/min of air. A disodium dihydrogen ethylenediamine tetraacetate aqueous solution was added to the stirred mixture to terminate the reaction. Then, an organic layer was washed with 1N hydrochloric acid aqueous solution and then washed with pure water. The thus-obtained solution was concentrated by an evaporator and then dried under a reduced pressure, to obtain 102.6 g of an epoxy resin curing agent of the present invention represented by the formula (1). The epoxy resin curing agent had a number average molecular weight of 877, a weight average molecular weight of 1,183 and a hydroxyl group equivalent of 477.

### (Synthesis Example 6)

A longitudinally long reactor having a volume of 2 liters and equipped with a stirrer, a thermometer, an air-introducing tube and baffleplates was charged with 1.3 g (0.012 mol) of CuCl, 70.7 g (0.55 mol) of di-n-butylamine and 400 g of methyl ethyl ketone. The components were stirred at a reaction temperature of 40 °C. A solution of 45.4 g (0.16 mol) of 4,4'-methylidenebis(2,3,6-trimethylphenol) as a bivalent phenol and 58.6 g (0.48 mol) of 2,6-dimethylphenol in 800 g of methyl ethyl ketone was dropwise added to the mixture in the reactor over 120 minutes while carrying out bubbling with 2L/min of air. After the completion of the addition, stirring was carried out for 60 minutes while continuing the bubbling with 2L/min of air. A disodium dihydrogen ethylenediamine tetraacetate aqueous solution was added to the stirred mixture to terminate the reaction. Then, an organic layer was washed with 1N hydrochloric acid aqueous solution and then washed with pure water. The thus-obtained solution was concentrated by an evaporator and then dried under a reduced pressure, to obtain 97.4 g of an epoxy resin curing agent of the present invention represented by the formula (1). The epoxy resin curing agent had a number average molecular weight of 852, a weight average molecular weight of 1,133 and a hydroxyl group equivalent of 460.

### (Synthesis Example 7)

A longitudinally long reactor having a volume of 2 liters and equipped with a stirrer, a thermometer, an air-introducing tube and baffleplates was charged with 1.3 g (0.012 mol) of CuCl, 70.7 g (0.55 mol) of di-n-butylamine and 400 g of methyl ethyl ketone. The components were stirred at a reaction temperature of 40 °C. A solution of 68.8 g (0.16 mol) of 4,4'-[1,4-phenylenebis(1-methylethylidene)] bis (2,3,6-trimethylphenol) as a bivalent phenol and 58.6 g (0.48 mol) of 2,6-dimethylphenol in 800 g of methyl ethyl ketone was dropwise added to the mixture in the reactor over 120 minutes while carrying out bubbling with 2L/min of air. After the completion of the addition, stirring was carried out for 60 minutes while continuing the bubbling with 2L/min of air. A disodium dihydrogen ethylenediamine tetraacetate aqueous solution was added to the stirred mixture to terminate the reaction. Then, an organic layer was washed with 1N hydrochloric acid aqueous solution and then washed with pure water. The thus-obtained solution was concentrated by an evaporator and then dried under a reduced pressure, to obtain 114.6 g of an epoxy resin curing agent of the present invention represented by the formula (1). The epoxy resin curing agent had a number average molecular weight of 934, a weight average molecular weight of 1,223 and a hydroxyl group equivalent of 496.

### (Synthesis Example 8)

A longitudinally long reactor having a volume of 2 liters and equipped with a stirrer, a thermometer, an air-introducing tube and baffleplates was charged with 1.3 g (0.012 mol) of CuCl, 70.7 g (0.55 mol) of di-n-butylamine and 400 g of methyl ethyl ketone. The components were stirred at a reaction temperature of 40 °C. A solution of 41.0 g (0.16 mol) of 4,4'-methylenebis(.2,6-dimethylphenol) as a bivalent phenol and 58.6 g (0.48 mol) of 2,6-dimethylphenol in 800 g of methyl ethyl ketone was dropwise added to the mixture in the reactor over 120 minutes while carrying out bubbling with 2L/min of air. After the completion of the addition, stirring was carried out for 60 minutes while continuing the bubbling with 2L/min of air. A disodium dihydrogen ethylenediamine tetraacetate aqueous solution was added to the stirred mixture to terminate the reaction. Then, an organic layer was washed with 1N hydrochloric acid aqueous solution and then washed with pure water. The thus-obtained solution was concentrated by an evaporator and then dried under a reduced pressure, to obtain 94.6 g of an epoxy resin curing agent of the present invention represented by the formula (1). The epoxy resin curing agent had a number average molecular weight of 801, a weight average molecular weight of 1,081 and a hydroxyl group equivalent of 455.

### (Synthesis Example 9)

A longitudinally long reactor having a volume of 5 liters and equipped with a stirrer, a thermometer, an air-introducing tube and baffleplates was charged with 2.8 g (0.028 mol ) of CuCl, 169.7 g (1.32 mol) of di-n-butylamine and 1,000 g of methyl ethyl ketone. The components were stirred at a reaction temperature of 40 °C. A solution of 41.0 g (0.16 mol) of 4,4'-methylenebis(2,6-dimethylphenol) as a bivalent phenol and 195.3 g (1.6 mol) of 2,6-dimethylphenol in 1,900 g of methyl ethyl ketone was dropwise added to the mixture in the reactor over 120 minutes while carrying out bubbling with 2L/min of air. After the completion of the addition, stirring was carried out for 60 minutes while continuing the bubbling with 2L/min of air. A disodium dihydrogen ethylenediamine tetraacetate aqueous solution was added to the stirred mixture to terminate the reaction. Then, an organic layer was washed with 1N hydrochloric acid aqueous solution and then washed with pure water. The thus-obtained solution was concentrated by an evaporator and then dried under a reduced pressure, to obtain 212.5 g of an epoxy resin curing agent of the present invention represented by the formula (1). The epoxy resin curing agent had a number average molecular weight of 1,613, a weight average molecular weight of 2,420 and a hydroxyl group equivalent of 834.

### (Synthesis Example 10)

A longitudinally long reactor having a volume of 5 liters and equipped with a stirrer, a thermometer, an air-introducing tube and baffleplates was charged with 3.9 g (0.039 mol) of CuCl, 237.5 g (1.84 mol) of di-n-butylamine and 1,300 g of methyl ethyl ketone. The components were stirred at a reaction temperature of 40 °C. A solution of 41.0 g (0.16 mol) of 4,4'-methylenebis(2,6-dimethylphenol) as a bivalent phenol and 292.9 g (2.4 mol) of 2,6-dimethylphenol in 1,700 g of methyl ethyl ketone was dropwise added to the mixture in the reactor over 120 minutes while carrying out bubbling with 2L/min of air. After the completion of the addition, stirring was carried out for 60 minutes while continuing the bubbling with 2L/min of air. A disodium dihydrogen ethylenediamine tetraacetate aqueous solution was added to the stirred mixture to terminate the reaction. Then, an organic layer was washed with 1N hydrochloric acid aqueous solution and then washed with pure water. The thus-obtained solution was concentrated by an evaporator and then dried under a reduced pressure, to obtain 305 g of an epoxy resin curing agent of the present invention represented by the formula (1). The epoxy resin curing agent had a number average molecular weight of 2,150, a weight average molecular weight of 3,256 and a hydroxyl group equivalent of 1,093.

### (Example 6)

The epoxy resin curing agent obtained in Synthesis Example 4, an epoxy resin and a curing accelerator were mixed as shown in Table 3 such that the molar ratio (epoxy group/hydroxyl group) of hydroxyl group and epoxy group became 2.6, the mixture was molten, degassed and molded at 120 °C, and then it was cured at 180 °C for 10 hours, whereby a cured product was obtained.

### (Examples 7 to 14)

Each of the epoxy resin curing agents obtained in Synthesis Examples 4 to 10 was respectively mixed with an epoxy resin and a curing accelerator as shown in Table 3 such that the molar ratio (epoxy group/hydroxyl group) of a hydroxyl group and an epoxy group became 1, the mixture was molten, degassed and molded at 120 °C and then it was cured at 180 °C for 10 hours, whereby cured products were obtained.

### (Comparative Example 4)

An epoxy resin, an epoxy curing agent and a curing accelerator were mixed as shown in Table 3, and the mixture was molten, degassed and molded at 120 °C and then cured at 180 °C for 10 hours, whereby a cured product was obtained.

### (Comparative Examples 5 and 6)

An epoxy resin, an epoxy curing agent and a curing accelerator were mixed as shown in Table 3 such that the molar ratio (epoxy group/hydroxyl group) of a hydroxyl group and an epoxy group became 1, the mixture was molten, degassed and molded at 120 °C, and then it was cured at 180 °C for 10 hours, whereby cured products were obtained.

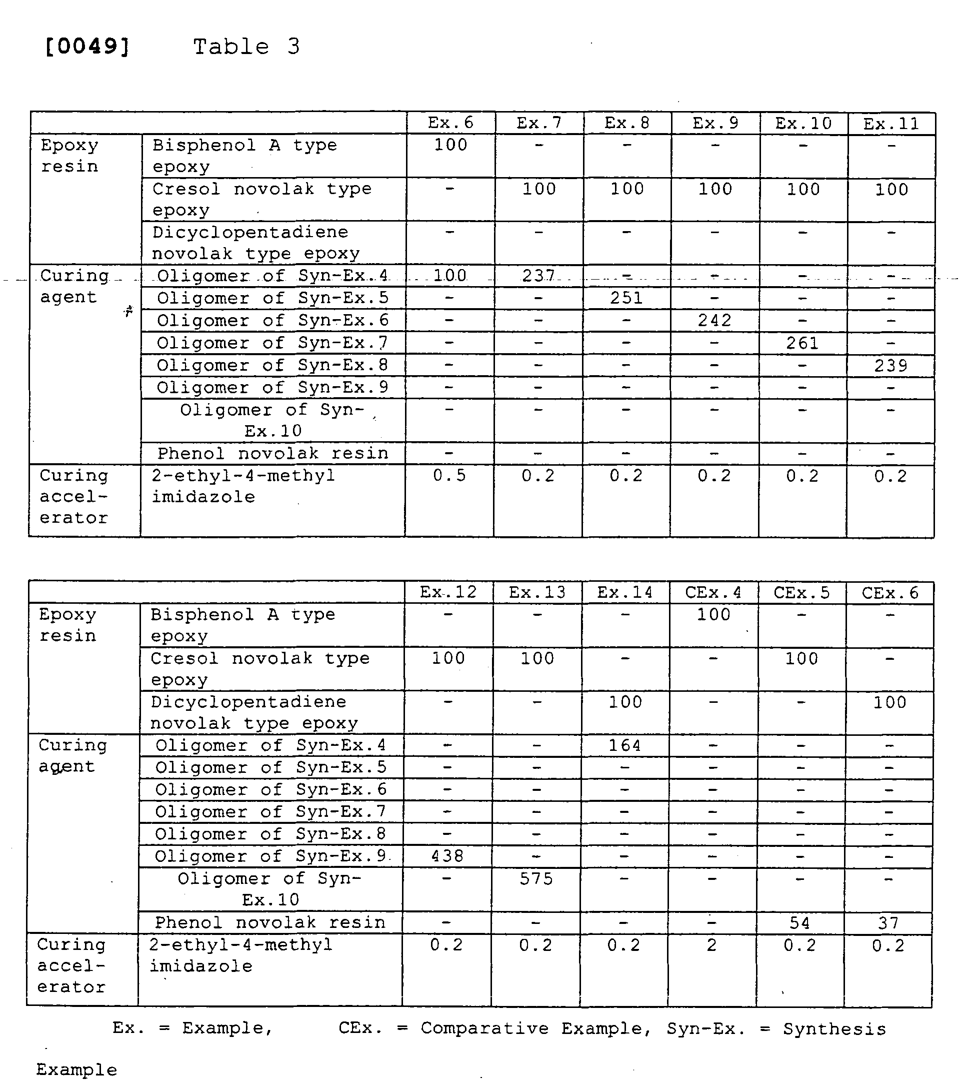

Bisphenol A type epoxy: Epikote 828 (supplied by Japan epoxy resin)
Cresol novolak type Epoxy: EOCN102S (supplied by Nippon Kayaku Co., Ltd.)
Dicyclopentadiene novolak type Epoxy: HP7200 (supplied by DAINIPPON INK AND CHEMICALS, INCORPORATED)
Phenol novolak resin: TD2093 (supplied by DAINIPPON INK AND CHEMICALS, INCORPORATED)

Table 4 shows evaluation results of physical properties of the cured products.

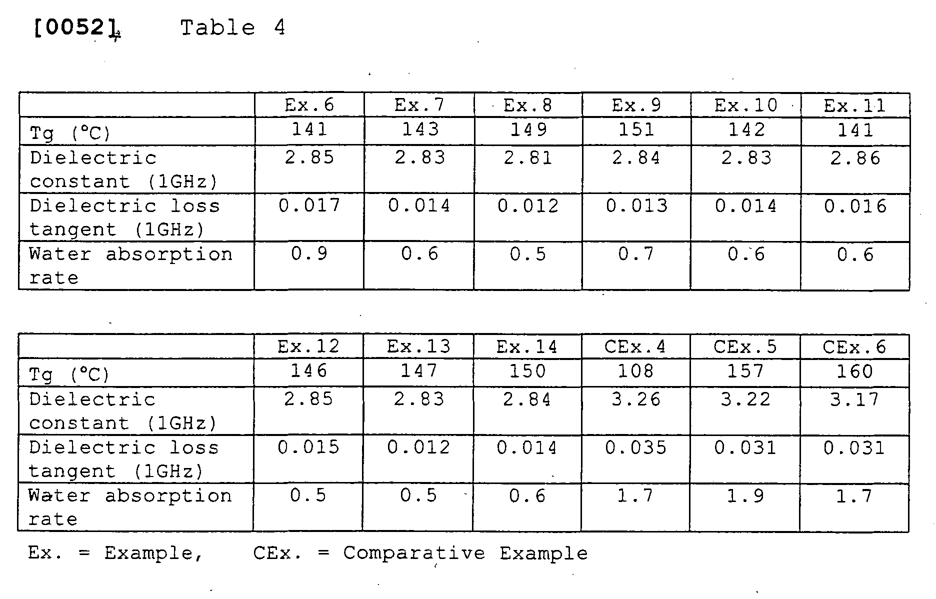

Typically, -(Y-O)- is a moiety of the formula (3) or a random arrangement of from 2 to 10, preferably 2 to 5, more preferably 2 to 3 moieties of the formula (3). Preferably, -(Y-O)- is a moiety of the formula (4) or (5), or a random arrangement of from 2 to 10, preferably 2 to 5, more preferably 2 to 3 moieties of the formula (4) or (5).

## Claims

1. An epoxy resin curing agent having a number average molecular weight of 500 to 3,000, represented by the formula (1), 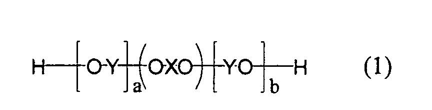 wherein:
- -(O-X-O)- represents a moiety of the formula (2) 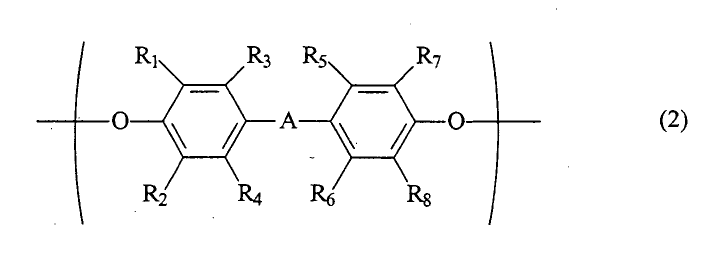 in which R₁, R₂, R₇ and R₈ are the same or different and represent a halogen atom, a C₁-C₆ alkyl group or a phenyl group, R₃, R₄, R₅ and R₆ are the same or different and represent a hydrogen atom, a halogen atom, a C₁-C₆ alkyl group or a phenyl group, and A is a direct bond or a linear, branched or cyclic C₁-C₂₀ hydrocarbon group;
- -(Y-O)- is a moiety of the formula (3), 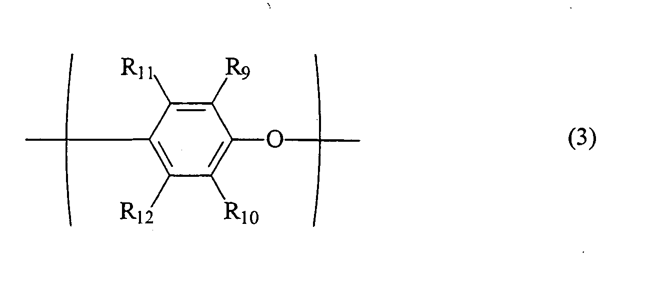 in which R₉ and R₁₀ are the same or different and represent a halogen atom, a C₁-C₆ alkyl group or a phenyl group and R₁₁ and R₁₂ are the same or different and represent a hydrogen atom, a halogen atom; a C₁-C₆ alkyl group or a phenyl group or -(Y-O)- is a random arrangement of at least two kinds of moieties of the formula (3); and
- each of a and b is an integer of 0 to 30, provided that at least either a or b is not 0.

2. An epoxy resin curing agent according to claim 1, wherein R₁, R₂, R₇ and R₈ are methyl groups and -(Y-O)- is a moiety of the formula (4) or the formula (5) or a random arrangement of at least two moieties of the formula (4) and the formula (5),

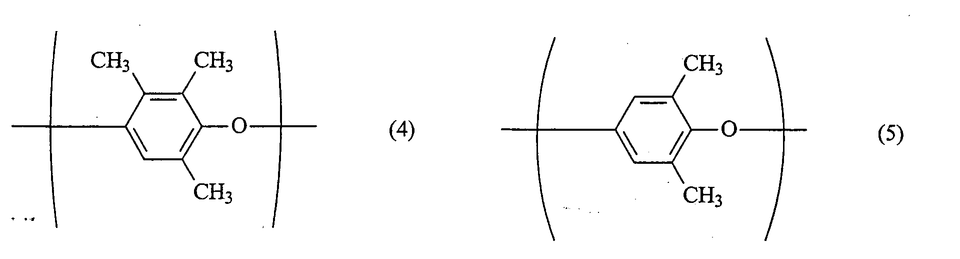

3. An epoxy resin curing agent according to claim 1 or 2, wherein R₃, R₄, R₅ and R₆ are hydrogen atoms.

4. An epoxy resin curing agent according to claim 1 or 2, wherein R₃ and R₆ are hydrogen atoms and R₄ and R₅ are methyl groups.

5. An epoxy resin curing agent according to any one of the preceding claims, wherein at least one -(Y-O)- is a moiety of the formula (5).

6. An epoxy resin curing agent according to claim 5, wherein each -(Y-O)- is a moiety of the formula (5).

7. Use of a compound of the formula (1), as defined in any one of the preceding claims to cure an epoxy resin.

8. A curable epoxy resin composition containing an epoxy resin and a compound of the formula (1), as defined in any one of claims 1 to 6.

9. A cured product obtainable by curing the curable epoxy resin according to claim 8.

10. A printed circuit board containing, as a substrate, a cured product according to claim 9.
